(19) **Europäisches Patentamt**
**European Patent Office**
**Office européen des brevets**

(11) **EP 2 459 392 B1**

(12) **EUROPEAN PATENT SPECIFICATION**

(45) Date of publication and mention of the grant of the patent:
**03.07.2013 Bulletin 2013/27**

(21) Application number: **10747665.7**

(22) Date of filing: **15.07.2010**

(51) Int Cl.:
***B60C 9/08*** (2006.01)   ***B60C 9/00*** (2006.01)

(86) International application number:
**PCT/IB2010/001732**

(87) International publication number:
**WO 2011/012944 (03.02.2011 Gazette 2011/05)**

(54) **TIRE FOR A MOTORCYCLE AND METHOD FOR CONTROLLING A MOTORCYCLE**

REIFEN FÜR EIN MOTORRAD UND VERFAHREN ZUM STEUERN EINES MOTORRADES

PNEU POUR UN MOTOCYCLE ET METHODE POUR CONTROLER UN MOTOCYCLE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.07.2009 IT MI20091374**
**02.11.2009 US 272780 P**

(43) Date of publication of application:
**06.06.2012 Bulletin 2012/23**

(73) Proprietor: **Pirelli Tyre S.P.A.**
**20126 Milano (IT)**

(72) Inventors:
• **BRUSCHELLI, Luca**
**I-20126 Milano (IT)**
• **GIAMBELLI, Roberta**
**I-20126 Milano (IT)**
• **GRASSI, Lisa**
**I-20126 Milano (IT)**
• **TIRELLI, Diego**
**I-20126 Milano (IT)**
• **MONZANI, Alessandro**
**I-20126 Milano (IT)**

(74) Representative: **Tansini, Elio Fabrizio et al**
**BUGNION S.p.A.**
**Viale Lancetti 17**
**20158 Milano (IT)**

(56) References cited:
**EP-A- 1 849 895      JP-A- 2007 153 175**
**JP-A- 2009 057 008    US-A1- 2002 195 185**

## Description

### FIELD OF THE INVENTION

The present invention relates to a method for controlling a motor vehicle during a manoeuvre to change direction and/or speed, in particular at high speed.

The present invention also relates to tyres for motor vehicles, i.e. tyres having a high transverse curvature, in particular tyres intended to be mounted on the front wheel or on the rear wheel of motor vehicles of high-power (for example 80 kW or more) and/or of medium-high piston displacement (for example 600 cm$^3$ or more), which allow to be controlled during a manoeuvre to change direction and/or speed.

### PRIOR ART

Attention is drawn to the disclosure of JP-A-200957008.

In recent times there has been a tendency to introduce onto the market motor vehicles for road use of even increasingly power. New sports motor vehicles, type-approved for road use, with piston displacements of 600 cm$^3$ or more, currently develop powers of the order of 80-90 kW and more.

The tyres used in the aforementioned vehicles must be able to ensure excellent grip in all driving conditions and particularly during braking, when leaning down at the beginning of a corner and during acceleration when coming out from a corner (rising back up from the leaning position).

In tyre manufacturing, the manufacture of the carcass structure is of great importance, since it is the carcass that has to structurally withstand most of the stresses that are transmitted by the road surface to the tread and from here to the wheel and vice-versa.

According to what is shown in the files of the 161st Spring Technical Meeting, April 29th - May 1st 2002, Savannah, Georgia - Rayon the advanced material for rubber reinforcement - ACS Rubber Division by Dr. Christian Norhausen, Cordenka GmbH, Germany, Rayon is considered the material that has the best properties in the building of cords for carcass plies of high-performance tyres.

According to the authors of the article, in tyre structures optimised for balancing performance and fatigue resistance Rayon is the most reliable material. Also according to the quoted article, the hot air shrinkage values are low for Rayon and aramid fibres and are relatively high for PEN and Nylon (PA66), and as a consequence of this shrinkage, these last two materials suffer a decrease in dynamic elastic modulus (E') when the temperature increases (i.e. a "thermoplastic behaviour") that actually makes it unadvisable the use of these materials in tyres intended for high performance subject to high operating temperatures.

Another type of textile material used in carcass cords consists of aromatic polyamide fibres, commonly known as "aramid" fibres. An example of a carcass made through aramid fibre cords is described in European patent application EP 0 860 302, relating to a tyre whose carcass is made of cords, preferably Aramid cords with a fibre count of less than 1100 dtex/2, having particular viscoelastic characteristics that, according to what is asserted, provide for an improved behaviour during travel. Each carcass cord has a complex elastic modulus E* (kgf) and a loss factor, tan delta, which satisfy the following conditions:

tan delta > 0
tan delta $\leq$ 0.001 x E* - 0.173
tan delta $\leq$ 0.0003 x E* - 0.174
E* $\leq$ 340
at a temperature of 120°C.

Another type of known fibre is lyocell cellulose fibre (or just lyocell), as, for example, described in the document Lyocell, The New Generation of Regenerated Cellulose in Acta Polytechnica Hungarica, Vol. 5, No. 3, 2008 by Èva Borbèly - Professor of Dept. of Packaging and Paper Technology, Budapest Tech - Doberdò ùt 6, H-1034 Budapest, Hungary.

US 6852413B2, to Hyosung Corporation, suggests the use of lyocell in tyres for automobiles. However, according to what is stated in the presentation of the Tire Technology Expo 2008 - Cologne, March 21, 2008, speakers B. Jelsma, K. Uihlein, concerning fibres considered for Ultra High performance Tires (UHP), in the field of automobiles rayon is considered to be the best material for tyres. Typical dimensions for UHP tyres according to such a presentation are: section >= 215 mm, height/section ratio <= 50% rim diameter >= 17" speed index >= W (270 km/h). In the rayon/lyocell comparison commented on in pages 24-26, for example, lyocell has a comparable tenacity, a higher modulus, a significantly lower elongation at break and a lower fatigue resistance compared to rayon.

## SUMMARY OF THE INVENTION

According to the present invention, the control of the motor vehicle perceived by the driver, and thus the performance that he can obtain, strictly depends upon the motor vehicle's grip in all conditions and it is thus strictly correlated to the footprint area, i.e. the surface of the tyre in contact with the road surface as it rolls over the ground.

When used for racing, in order to increase the ground footprint area of the tyre, sometimes the inflation pressure thereof is reduced. For example, a rear tyre of a sports motorbike of 1000 cm$^3$, which on the road is typically inflated to pressures of 2.9 bar, in the track is brought to pressures of 1.9 - 2 bar.

Moreover, for every tyre there is an ideal compromise for the inflation pressure, which most advantageously balances all of the variations of the physical parameters caused by the pressure on the tyre itself.

Indeed, a pressure decrease means both a decrease in the static rigidities (in its components: lateral, vertical and longitudinal), and thus a greater deformation in all directions of the tyre itself when in use, and a decrease in the dynamic rigidities (drift rigidity, camber rigidity and self-aligning moment), and therefore a lower ability of the tyre to generate dynamic forces in reaction to the various stresses.

A tyre inflated to lower pressures than those of reference deforms more, and it will inevitably work at higher thermal conditions, which can mean a premature degradation of the tyre, since all of the components, once a certain level of exposure to thermal stress has been exceeded, deteriorate and lose physical and mechanical characteristics. Moreover, the tyre is more difficult to control and is slower in changes of direction due to the greater pliability of the profile.

Typically, in the racing field, tyres structures are provided that are able to make the overall weight of the tyre relatively low, also reducing its vertical rigidity due to the need to obtain a ground footprint area as great as possible.

For "race" driving with sudden changes in direction and/or speed it is however necessary to be able to have a structure that is rigid as a whole, since a structure that is not very rigid does not allow the tyre to quickly respond to the continuous stresses to which it is subjected and consequently it does not transmit to the driver the sensations that allow him to control the motor vehicle.

In order to obtain increased performance in the racing field, Aramid fibre has been used as carcass reinforcement material, in particular to manufacture the radial structure on which the carcass is built by rubber. Aramid fibres do indeed have a high rigidity that makes it possible to obtain a more advantageous behaviour of the tyre at an operating pressure that is lower on average by 10% with respect to the tyre built with standard materials.

Indeed, the greater rigidity of the fibre gives the tyre, inflated 10% less than the reference value, the same levels of drift rigidity, vertical rigidity, lateral rigidity of the reference tyre built with a standard carcass material and inflated to the reference pressure. Therefore, this solution makes it possible to take advantage of the greater impression area without the drawbacks due to the decreased rigidity of the tyre operating at a pressure which is lower than usual. Moreover, the tyre built with a carcass provided with Aramid cords offers the driver a more linear and more predictable response making the motor vehicle easier to control, so as to allow high performance to be maintained over a short distance, typical of racing use.

For the purposes of the present invention, aramid fibres have some drawbacks that compromise their use as structure of carcass plies of tyres type-approved for road use.

In the experience of the Applicant, moreover, aramid fibres as structure of a carcass have shown low adhesion to elastomeric compounds. This has proven to be a potential cause of problems of detachment of the cord from the elastomeric matrix in the case of repeated cyclical stresses making the use of such a fibre in tyres for long road journeys critical.

Another drawback shown by such fibres is the poor fatigue resistance when subjected to repeated bending stresses, particularly at temperature conditions of 50°C - 100°C like those found in operation during a competition.

This weakness has proven to constitute a risk factor since it lowers the safety coefficient of the tyre with respect to that of a construction with a carcass made from lower performance materials like PET, Nylon or Rayon.

In particular, a tyre with an Aramid carcass that has absorbed stresses corresponding to use over a distance of 50/100 km (thus between 25000 and 50000 complete rolling cycles) can become critical with risks of instantaneous breaking of the carcass and consequent blowing of the tyre.

This drawback therefore implies great caution to be taken when using tyres with Aramid carcass, actually limiting their application to just short races (less than 100 km), in a closed circuit, with drivers informed of the potential risks, only with tyres marked as "NHS" ("not for highway service", i.e. tyres which can be used only on the track and not on public roads).

For road tyres, indeed, achieving high performance cannot be at the expense of the safety that the tyre must ensure in terms of reliability and lifetime.

Tyres type-approved for road use must not have sudden structural failures and must ensure many thousands of kilometres of travel. Above all, it must be ensured that there are no sudden degenerative phenomena of the structural elements that could lead to very dangerous consequences on the ability to control a two-wheeled vehicle.

According to the experience of the Applicant, tyres for motor vehicles of medium-high piston displacement and high power are thus intended either for the road or for racing, without tyres adapted for use in one field being able to be used in the other.

The experience gained by the Applicant does indeed show that on the one hand, tyres made with Rayon carcass, whilst being suitable for road use, thanks to the high fatigue and elongation at break resistance characteristics of such a material, do not achieve the rigidity values necessary for racing performance like those required by the current market of medium-high piston displacement motor vehicles. On the other hand, racing tyres made with aramid fibre carcass cords, whilst having excellent tensile characteristics, do not achieve the necessary qualities of durability and reliability required to allow their use on the road, due to their low fatigue resistance.

The Applicant has therefore noted that, in view of an increasing demand to use sports motorbikes with high piston displacement and/or power, both in the road and on the track, the driver, in order to be able to control the motor vehicle in both driving conditions, is generally forced to change tyres, so as to obtain, respectively, the durability and reliability, that allow long distances to be covered in safety, by using road tyres, and the possibility of achieving high performance, but only for relatively short distances on closed circuits, by using racing tyres.

The Applicant has considered the problem of controlling a motor vehicle during a manoeuvre to change direction and/or speed, in particular at high speed for its use both on the track and on the road.

In particular, the Applicant has considered the problem of developing a tyre for motor vehicles that makes it suitable to be driven both on the track and on the road. From some random tests by the Applicant it has surprisingly been found that a tyre with a radial carcass built on cords of twisted lyocell fibres makes it possible to perform a sports driving on a track with it partially deflated and to drive on the road for long distances with it inflated.

Even more surprisingly, it has been found that the same tyre with such a carcass kept its road driving qualities substantially unaltered for long distances. The Applicant has tried to understand the reasons for this behaviour and then to identify the method or the conditions that allow it.

In relation to such a finding, the Applicant has then observed that the carcass structure is subjected to a substantially constant imposed stress, due to the residual shaping and moulding/vulcanization tension of the tyre, to which it is added a variable stress generated by the rolling of the tyre in the various driving conditions (normal driving on the road or sports driving on the track), and during the various manoeuvres that the motor vehicle is subjected to. For tyres adapted to be used on high piston displacement and/or power motor vehicles, the Applicant has estimated that such a residual shaping and moulding/vulcanization tension imposes a pre-elongation value upon the cords of the carcass structure of about 3% with respect to an undeformed condition. Through simulations carried out through finite element analysis (FEA), the Applicant has also been able to estimate that the deformation imposed by the variable stress to which the carcass structure is subjected in the footprint area (and in the adjacent areas) of the tyre during use can vary from a value close to zero to about 1%.

During use, according to the simulations through finite element analysis, the Applicant has therefore estimated that the cords of the carcass structure would thus be stressed during rolling so as to stretch between about 3% and about 4% with respect to an undeformed condition. Based on such an observation the Applicant has hypothesised that in order to be able to control a motor vehicle, in particular a motor vehicle of medium-high piston displacement of at least 600 cm$^3$ and high power, of at least 80 kW, during sudden manoeuvres to change direction and/or speed, in particular with tyres inflated to inflation pressures lower than the reference pressure, it is important to have tyres with a controlled elastic response of the carcass structure, and thus of the cords thereof, in the aforementioned stretching range of the cords substantially comprised between about 3% and about 4%.

In this respect, the Applicant has noted how, in the aforementioned stretching range, Rayon cords are not very rigid and thus not capable of transmitting a sufficiently quick response to the driver in a sports driving of the motor vehicle characterised by sudden changes of direction and/or speed. The Applicant has further noted that Aramid cords, in the aforementioned stretching range, are close to breaking, so as not to ensure the necessary safety for road use.

The present invention, in one aspect thereof, relates to a method, according to claim 1, for controlling a motor vehicle equipped with front and rear tyres, respectively, having a transverse curvature ratio (f/C) of at least 0.20 and a total height/width (H/C) ratio of at least 0.5, both in normal driving conditions and on a racing track, at least one of said tyres having an inflation pressure of between 50% and 90% of the low load reference value in normal driving.

Said at least one of said tyres has a radial carcass comprising textile cords that at said inflation pressure, when there are sudden changes in speed and/or direction, give the whole of the carcass a controlled elastic response that allows the motor vehicle to be controlled.

Said controlled elastic response results from the response of said textile cords that is substantially comprised between about 140 N and about 200 N for an elongation of about 3% and substantially comprised between about 170 N and about 240 N for an elongation of about 4%.

According to the invention, said controlled elastic response results from the elastic response provided by a carcass built substantially on cords of lyocell fibre.

In another aspect, the invention relates to a tyre according to claim 2.

Surprisingly, the Applicant has found that Lyocell, whilst being very similar to Rayon, since it is derived from cellulose, has tensile characteristics that can be adjusted so as to make them close to those of aramid fibres, whilst still maintaining a sufficiently high fatigue resistance to allow road use of the tyre in total safety.

The Applicant has carried out traction tests on fibres according to the tests governed by BISFA (Bureau International pour la Standardisation des Fibres Artificielles).

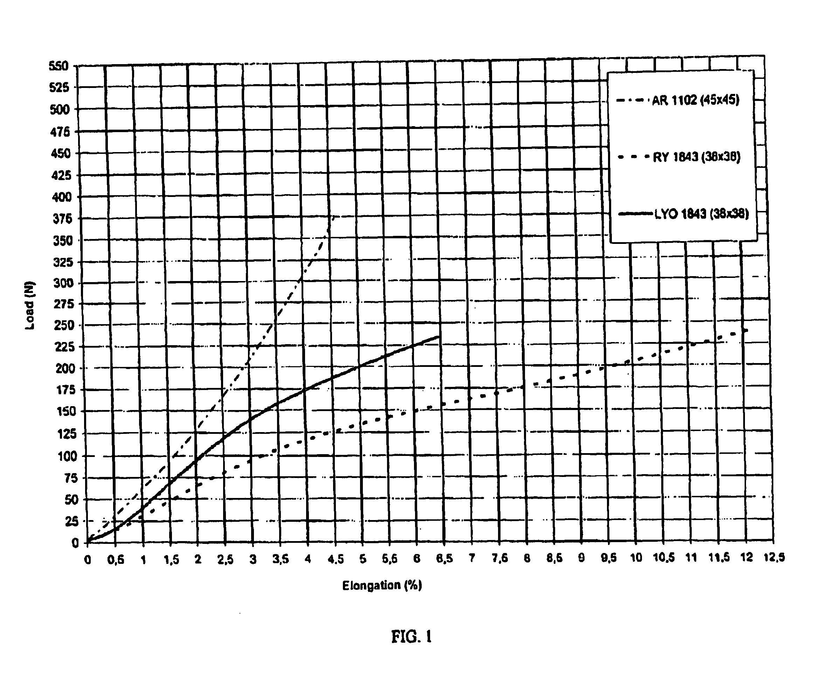

Figure 1 shows a comparison between load/elongation curves of cords made from aramid fibre, from Rayon fibre and from Lyocell fibre carried out according to the following tests:

For aramid fibres: BISFA - Testing methods for yarns of para-aramid fibres 2002 edition - Determination of tensile properties - Chapter 7 - Testing procedure - paragraph 7.5 - with initial pre-tensioning procedure.
For Rayon: BISFA - Testing methods for yarns of viscous fibre, cupro, acetates, triacetates and lyocell - 1997 edition, Determination of tensile properties - Chapter 7 - Tension testing conditions: dry testing in an oven -

Table 7.1 - Testing procedure - paragraph 7.5 - with testing on samples under dry relaxation in an oven - sub-paragraph 7.5.2.4.

In particular, a typical carcass cord made from Aramid can ensure, depending on the construction, a load greater than 200 N at 3% elongation, whereas with conventional materials (for example Rayon) it is not possible to reach 100 N of load for the same elongation. Moreover, the Aramid cord has an elongation at break of around 4%, whereas the Rayon cord has a much higher elongation at break.

With reference to figure 1, it should however be noted that Rayon has a rigidity reduced by more than half in the field of high deformations greater than 3% (increase in tension 13 N for every 1% of deformation added) with respect to the field of low deformations of below 3% (increase in tension 30 N for every 1% of deformation added). From such tests carried out according to BISFA standards on samples of textile cords made from aramid fibre, Rayon and Lyocell (results shown in figure 1) the Applicant has been able to note that Lyocell, in the field of elongations of 3% and more, has higher elastic response values than all types of cords made from Rayon. In particular, at elongations of 3% and 4% the elastic response values quoted above can be obtained.

The Applicant has also been able to note that in the field of high elongations, aramid cords give way without being able to work, whereas lyocell cords resist.

In another aspect, the invention therefore relates to a tyre for motor vehicles comprising: a carcass structure comprising a central crown portion and two axially opposite side portions, each side portion being associated with a respective annular bead structure; a belt structure applied in a position radially outside of the carcass structure at the central crown portion; a tread band applied in a position radially outside of the belt structure; wherein the carcass structure comprises at least one carcass layer comprising cords made from lyocell fibre.

It should be noted that lyocell differs from rayon for a more crystalline structure.

Lyocell is a cellulose fibre, obtained with a process that is based on dissolving raw cellulose in an amine oxide solvent. The solution is then filtered, extruded in an aqueous bath of diluted amine oxide and finally coagulated in the form of fibre. It is considered that the properties of lyocell, for the purposes of the present invention, are due both to its chemical nature of a fibre derived from cellulose and to the dissolving and direct extrusion process to which it is subjected, in particular in the presence of a diluted amine oxide.

The dissolution of the cellulose intended to form the Lyocell is thus direct, unlike the process for obtaining Rayon wherein the cellulose fibres of wood or of cotton are dissolved in advance with caustic soda that reacts with carbon sulphide giving a water-soluble compound in the form of colloidal solution, called viscose, which having been passed through small nozzles in an acid bath converts back into cellulose.

For the purposes of the present invention, the following definitions apply:

By "tyre for motor vehicles" we mean a tyre having a high transverse curvature ratio f/C, typically greater than 0.20, capable of reaching high camber angles during cornering of the motor vehicle.
By "camber angle" we mean the angle between the equatorial plane of the tyre mounted on the wheel of the motor vehicle and a plane perpendicular to the road surface.

The transverse curvature is normally defined by the particular value of the ratio between the distance (f) between the radially outer point of the tread and the line passing through the laterally opposite extremities of the tread itself, measured on the equatorial plane of the tyre, and the distance (C) measured along the chord of the tyre between said extremities.

By "equatorial plane" of the tyre we mean a plane perpendicular to the rotation axis of the tyre and that divides the tyre into two symmetrically equal parts.

By "circumferential" direction we mean a direction generically oriented according to the direction of rotation of the tyre, or in any case slightly inclined with respect to the direction of rotation of the tyre.

By "transversal" direction we mean a direction generically perpendicular or in any case considerably inclined with respect to the direction of rotation of the tyre.

By "low load pressure reference value in normal driving" we mean the pressure value to which it is advised by the motor vehicle manufacturer to inflate each tyre, in the case in which just the driver of the motor vehicle is on board, thus without a passenger and without luggage, for driving on the road.

Indeed, for every motor vehicle the manufacturer indicates a reference pressure to which the tyres should be inflated. Such a pressure value is indicated at least for a low load (typically for driving with just the driver weighing 75 kg) and for a maximum load (typically for driving with driver, passenger, luggage, for the maximum capacity of the motor vehicle). Typically, the reference pressures vary, between the maximum and minimum load values, by a few tenths of a bar.

In a preferred embodiment, the tyre for motor vehicles of the invention is a rear tyre wherein the dimensions of the chord are comprised substantially between 160 and 210 mm.

Preferably, the distance (f) between the radially outer point of the tread and the line passing through the laterally opposite extremities of the tread itself of the rear tyre is comprised substantially between 50 and 80 mm.

Typically, the transverse curvature ratio (f/C) is substantially comprised between 0.20 and 0.50. Preferably, the total height/chord (H/C) ratio is substantially comprised between 0.5 and 0.7.

In a preferred embodiment, the tyre according to the present invention is a tyre for a front wheel of a motor vehicle wherein the dimensions of the chord are comprised substantially between 110 and 130 mm.

Preferably, the distance (f) between the radially outer point of the tread and the line passing through the laterally opposite extremities of the tread itself of the front tyre is comprised substantially between 45 and 65 mm. The transverse curvature/chord ratio (f/C) can be substantially comprised between 0.35 and 0.60. Preferably, the total height width (H/C) ratio is substantially comprised between 0.6 and 0.9.

The textile cords are identified with a numerical mark that represents the count of the fibre used and the number of ends that contribute to form the cord. Preferably, the density of the textile cords in the fabric that forms the carcass layer is comprised between 60 cords/dm and 130 cords/dm and it is typically expressed with the identifier F followed by the number of cords arranged per decimetre.

Preferably, the count or linear density of the yarn, which can be expressed in dTex, that is mass expressed in grams of a thread or thread-like reinforcing element whose length is 10000 m, or in denier (den), that is mass expressed in grams of a thread whose length is 9000 m, used in the textile cords incorporated in the carcass layer is comprised between 1000 dTex and 4000 dTex. The cords can be obtained through one or more thread-like reinforcing elements, or "ends", twisted to form the cord, preferably one, more preferably at least two or three thread-like reinforcing elements twisted together, where by "end" we mean a band of filaments twisted together.

Preferably, the count of the cords is comprised between 1000 dTex and 12000 dTex. Preferably, the count of the cords is comprised between 1220/1 dTex and 3680/3 dTex, where the terms "/1" and "/3" represent the number of ends of yarn twisted together in each construction. Preferably, the count of the cords is comprised between 1220/2 dTex and 1840/3 dTex.

Preferably, the counts used to make the cords of the invention are:

- 2240 dTex in the form of 1220/2 dTex equivalent to 2196 den = 1098/2 den
- 3680 dTex in the form of 1840/2 dTex equivalent to 3312 den = 1656/2 den
- 4880 dTex in the form of 2440/2 dTex equivalent to 4392 den = 2196/2 den
- 5220 dTex in the form of 1840/3 dTex equivalent to 4968 den = 1656/3 den
- 7320 dTex in the form of 2440/3 dTex equivalent to 6588 den = 2196/2 den

Preferably, the count of the cords is comprised between 1220/2 dTex and 1840/3 dTex.

Preferably, the thread-like lyocell elements for making the cords according to the invention can be selected by combining yarns having different counts to form an end that is then twisted by itself or together with other ends (in this way one talks of twisted lyocell fibres). According to such a set-up, for example, it is possible to make an end by combining two thread-like elements having respective counts of 1220 dTex and 1840 dTex obtaining an end of count 3060 dTex and then build a cord for example with two twisted ends of count 3060/2 dTex. According to another aspect of the invention the Applicant has found that it is possible to vary the controlled elastic response of the carcass by combining different end counts with different numbers of ends per cord and with different levels of twisting.

Of course, the man skilled in the art will be able, for the purposes of the invention, to select the number and count of the threads, degree of twisting and density among the above variables to build a tyre carcass for a motor vehicle that allows the described control in relation to the performance and weight of the motor vehicle itself.

In the present description and in the claims, by the expressions (38x38), (25x25) and in general (nxn) we indicate, with the first number the twists given to the yarn or assembly of thread-like reinforcing elements or end and with the second number the twists given to the cord after having gathered the ends, expressed in twists per decimetre (dm).

Preferably, the twisting given respectively to each end and to the assembly of ends that form the cord is between 20 and 55 twists per decimetre or equivalently from 200 TPM to 550 TPM (Twists Per Meter).

Preferably, the structure of the cord is made up of 2 or 3 ends of multi-filament Lyocell.

## BRIEF DESCRIPTION OF THE DRAWINGS

Further characteristics and advantages of the tyre adapted to carry out the method according to the present invention are outlined in the following detailed description of some preferred embodiments thereof, made with reference to the attached drawings only as an example and not for limiting purposes. In such drawings:

- figure 1 is a graph that illustrates the comparison of the shape of load/elongation curves obtained according to tests approved by BISFA for cords made with different fibres.
- figure 2 schematically shows a half-section perpendicular to the equatorial plane of a tyre for motor vehicles;
- figure 3 shows a table containing the results of comparative tests carried out on different cords made in textile fibres.

## DETAILED DESCRIPTION OF EMBODIMENTS OF THE INVENTION

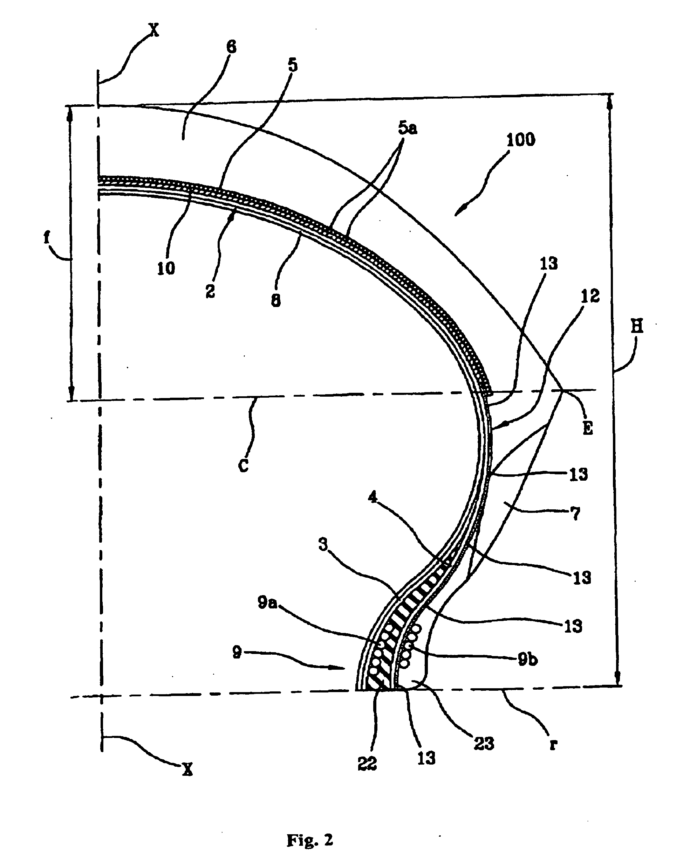

With reference to figure 2, reference numeral 100 wholly indicates a tyre for motor vehicles, comprising a carcass structure formed of at least one carcass ply 2. The carcass ply 2 is configured according to a substantially toroidal configuration and it is engaged, through the opposite circumferential edges thereof, with at least one annular reinforcement structure 9, so as to form a structure usually identified with the name "bead".

In the preferred embodiment illustrated in figure 2 the carcass ply 2 can be manufactured according to the process illustrated in document WO 00/38906. The carcass ply 2 comprises a first plurality of strips 3 and a second plurality of strips 4 made from elastomeric material, comprising reinforcement elements, arranged alternatively along the profile of a structure with substantially toroidal extension, according to an inverted U-shaped configuration so as to be adjacent in the crown areas and substantially stacked in the bead area.

The reinforcement elements, included in the carcass ply 2, comprise cords made through a plurality of thread-like elements or ends, made from Lyocell.

The ends are twisted individually and then subjected to further twists after having been gathered together, so as to form a multi-filament cord.

In the embodiment shown in figure 2, the annular reinforcement structure 9 has at least one annular insert made through a preferably metallic long-shaped element at least partially coated with elastomeric material arranged in substantially concentric coils, each coil being defined alternatively by a continuous spiral section or by concentric rings formed by respective metallic cords. Preferably, as illustrated in figure 2, there are two annular inserts 9a and 9b, and a filler 22 of elastomeric material in a position axially outside of the first annular insert 9a. The second annular insert 9b is arranged, again as shown in figure 2, in a position axially outside of the strips 4. Finally, in a position axially outside of said second annular insert 9b, and not necessarily in contact with it, there is a further filler 23 that ends the manufacture of the annular reinforcement structure 9.

In an alternative embodiment, not shown, a carcass ply 2 has its opposite side edges associated with conventional annular reinforcement structures known as bead wires. The association between carcass ply and bead wires, in this case, is carried out by bending the opposite side edges of the carcass ply around the same bead wires, so as to form the so-called carcass turn-up edges. The carcass structure can also comprise many carcass plies.

In a radially outer position of the carcass structure 2 a belt structure 5 is circumferentially applied, which has a tread band 6 circumferentially juxtaposed over it, on which, following a moulding operation carried out simultaneously with the vulcanization of the tyre, longitudinal and/or transverse recesses can be formed, arranged to define a desired tread pattern.

The tyre 100 further comprises a pair of sidewalls 7 applied laterally on opposite side to said carcass structure 2.

The profile of the right section of the tyre 100 has a high transverse curvature. In particular, the tyre 100 has a height of section H measured, on the equatorial plane X-X, between the top of the tread band and the fitting diameter, defined by the reference line r, passing through the beads of the tyre. The tyre 100 also has a width (or chord) C defined by the distance between the laterally opposite ends E of the tread itself, and a transverse curvature defined by the value of the ratio between the distance f of the top of the tread from the line passing through the extremities E of the tread itself, measured on the equatorial plane of the tyre, and the width C.

The tyre 100 preferred for carrying out the method according to the present invention is distinguished by a high transverse curvature since it must ensure a sufficient footprint area in all conditions of inclination of the motor vehicle.

By tyre with high transverse curvature we indicate a tyre whose transverse curvature ratio (f/C) is at least 0.20. Preferably (f/C) is respectively comprised between 0.20 and 0.5 for a rear tyre and between 0.35 and 0.6 for a front tyre.

The carcass structure 2 is typically coated on the inner walls thereof by a seal layer 8, called liner, essentially consisting of a layer of elastomeric material which is impermeable to air, suitable for ensuring the hermetic seal of the tyre itself once inflated.

The belt structure 5 preferably comprises rubber-coated cords, arranged substantially parallel and side-by-side to form a plurality of coils 5a. Such coils are substantially oriented according to the circumferential direction (typically with an angle of between 0° and 5°), such a direction being usually called "zero degrees" with reference to its angle with respect to the equatorial plane X-X of the tyre.

Preferably, the belt structure 5 comprises axially adjacent windings of a single cord, or of a band of rubber-coated fabric comprising axially adjacent cords, preferably up to five, wound in a coil.

Preferably, the cords of the belt structure 5 are metallic cords. Even more preferably, said cords are made through steel wires with high carbon content, that is steel wires with a carbon content greater than 0.7 - 0.8%.

Preferably, the cords of the belt structure 5 are metallic cords made from steel of the high elongation type (HE). In particular, such high elongation (HE) cords have a load-elongation diagram comprising a curvilinear portion located between two substantially rectilinear portions having different inclinations with respect to the axes of the diagram.

Such cords can for example consist of a certain number of strands, from one to five, preferably between three and four, each strand consisting of a certain number of elementary metallic filaments, from two to ten, preferably between four and seven. The elementary filaments typically have a diameter greater than 0.10 mm, preferably comprised between 0.12 and 0.35 mm. The filaments in the strands and the strands in the cord are helically wound together, preferably in the same direction, with equal or even different winding pitches for the wires and for the strands.

In particular, in a specific prototype prepared by the Applicant the belt 5 is formed through helical winding of a single cord 3x3x0.20 HE HT, coiled from one extremity to the other of the crown portion. The aforementioned indication defines an equiverse metallic cord formed from three strands, each consisting of three elementary wires of diameter equal to 0.20 mm; the acronym HE means "high elongation"; the acronym HT indicates "high tensile" steel, i.e. with high carbon content (about 0.8 %).

In an alternative construction (not shown in figure 2), the belt structure 5 can comprise at least two radially juxtaposed layers, each consisting of elastomeric material reinforced with cords (typically textile) arranged parallel to one another. The layers are arranged so that the cords of the first belt layer are oriented obliquely with respect to the equatorial plane of the tyre, whereas the cords of the second layer also have oblique orientation, but symmetrically crossed over with respect to the cords of the first layer, to form the so-called "cross-over belt"

In this case, generally, the cords of the belt structure are textile cords, for example textile cords made from synthetic fibre, for example Nylon, Rayon, PEN, PET, preferably from synthetic fibre with high modulus, in particular from aramid fibre (for example Kevlar® fibre). Alternatively, hybrid cords can be used, comprising at least one thread with low modulus, in other words not grater than about 15000 N/mm$^2$ (for example nylon or Rayon), interwoven with at least one thread with high modulus (for example Kevlar®), in other words not lower than 25000 N/mm$^2$.

Optionally, the tyre 100 can also comprise a layer 10 of elastomeric material arranged between said carcass structure and said belt structure 5 formed from said circumferential coils 5a, said layer 10 preferably extending over a surface substantially corresponding to the surface of extension of said belt structure 5. Alternatively, said layer 10 extends over a larger surface than the surface of extension of the belt structure 5.

In a further embodiment, an additional layer of elastomeric material (not shown in figure 2) is arranged between said belt structure 5 and said tread band 6, said layer preferably extending over a surface substantially corresponding to the surface of extension of said belt structure 5.

Alternatively, said layer extends only along at least one portion of the extension of the belt structure 5, for example over opposite side portions thereof.

Preferably, in tyre constructions in which the carcass plies are engaged, at the respective axially opposite side edges, with the respective bead wires so as to form the so-called turn-up edges, the carcasses are reinforced with Lyocell reinforcement cords having for example the following dimensional characteristics:

- 1840/3 (38x38) F97
- 1840/3 (30x30) F97
- 2440/2 (25x25) F80

where, for example, with reference to the first cord quoted above, the number "1840" represents the count expressed in dtex of the cord, "/3" represents the number of ends twisted together to form the cord, (38x38) respectively represents the number of twists given to each end and the number of twists given to the three ends gathered together, and "F97" represents the density, i.e. the number of cords arranged per decimetre.

Preferably, in tyre constructions in which the carcass ply has its opposite side edges associated, without turn-up, with the annular reinforcement structures, the carcasses are reinforced with Lyocell reinforcement cords having for example the following dimensional characteristics:

- 1840/3 (38x38) F75
- 2440/2 (35x35) F75

- 2440/2 (25x25) F75

With regard to the rear tyre, a construction was made with a carcass structure made of a single radial layer, coupled with a belt at "zero degrees".

This construction allows the weight of the tyre to be kept as low as possible (around 6 kg) and minimum vertical rigidity.

With regard to the front tyre a preferred construction comprises a textile carcass with two crossed-over plies (angle of between 65 and 80 degrees) with belt at "zero degrees". A construction of this type for the front tyre makes it possible to couple the structural elements and generate dynamic lateral forces in reaction to the steering angle. This is required to generate the forces necessary for cornering, or to begin the manoeuvre that allows leaning.

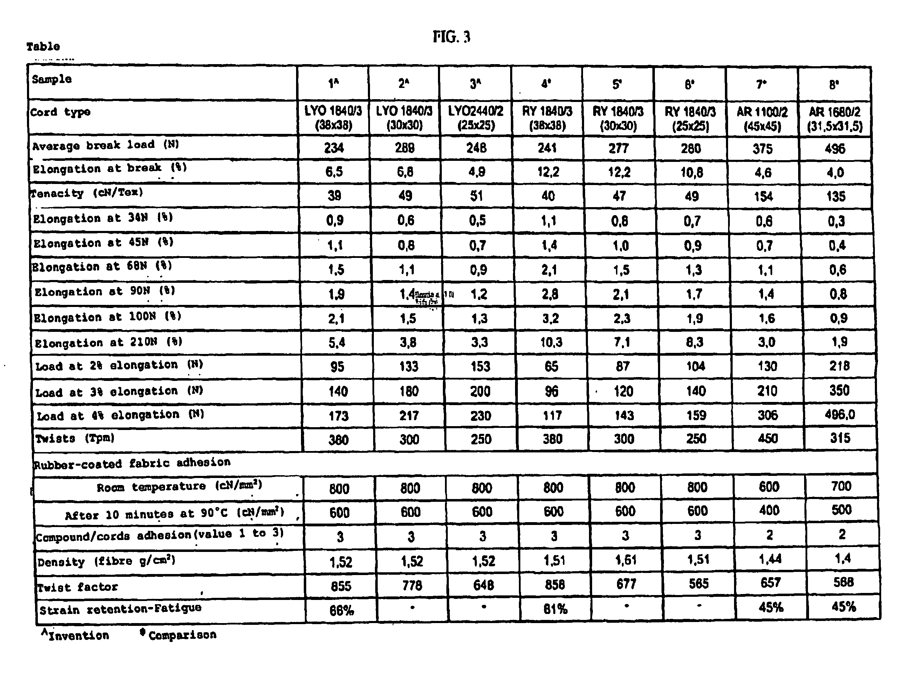

A series of comparative tests were carried out on mechanical properties, adhesion and fatigue resistance, between textile cords made from Lyocell, Rayon and Aramid fibres of different counts and subjected to different twisting. The results of the tests carried out are shown in the table of figure 3.

The cords used for the comparative tests were:

1^ LYO 1840/3 (38x38) in Lyocell fibre
2^ LYO 1840/3 (30x30) in Lyocell fibre
3^ LYO 2440/2 (25x25) in Lyocell fibre
4* RY 1840/3 (38x38) in Rayon fibre
5* RY 1840/3 (30x30) in Rayon fibre
6* RY 1840/3 (25x25) in Rayon fibre
7* AR 1100/2 (45x45) in Aramid fibre
8* AR 1680/2 (31.5x31.5) in Aramid fibre

With regard to the comparative tests between Lyocell (LYO) and Rayon (RY) a comparison was made between cords having the same "twist factor" in order to make the evaluation of mechanical properties that are highly dependent upon the aforementioned parameter homogeneous.

With reference to Aramid fibres (AR), for the comparison cords were used that are typically used for building carcasses in the field of racing, selected taking into account the balancing between modulus and fatigue resistance.

The mechanical properties were evaluated through the following tests according to the aforementioned BISFA standards:

For aramid fibres: BISFA - Testing methods for yarns of para-aramid fibres 2002 edition - Determination of tensile properties - Chapter 7 - Testing procedure - paragraph 7.5 - with initial pre-tensioning procedure.

For Rayon and for Lyocell: BISFA - Testing methods for yarns of viscous fibre, cupro, acetates, triacetates and lyocell - 1997 edition, Determination of tensile properties - Chapter 7 - Tension testing conditions: dry testing in an oven - Table 7.1 - testing procedure - paragraph 7.5 - with testing on samples under dry relaxation in an oven - sub-paragraph 7.5.2.4.

Tests were carried out to determine average breaking load; elongation at break; elongation at increasing loads (34N, 45N, 68N, 90N, 100N, 210N) and specific elongation load (2%, 3%, 4%).

The adhesion was measured through testing to determine static coupling.

The test was carried out on samples made from two rubber-coated fabrics coupled together so that the cords were arranged parallel to one another along the longer side of the test piece. Each test piece had dimensions of 200x20 mm.

The test piece was vulcanized in standard conditions and after vulcanization two incisions were made, on each test piece, transverse to the longitudinal axis of traction (one for each face of the sample) and suitably spaced apart, so as to cut all the cords of the first fabric from one side and the cords of the second fabric from the other.

The static adhesion force was evaluated measuring the strain necessary to obtain the separation, through cutting stress, between the two rubber-coated fabrics in the area located between the two incisions.

The coupling value is normalized to the unit surface on which the separation was carried out, and it is expressed in $cN/mm^2$.

The adhesion values were obtained through dynamometric traction testing carried out on samples in two different conditions: the first test carried out on samples conditioned at room temperature, the second carried out on samples immediately after having been subjected to a pre-heating of 90°C for 10 minutes.

The values obtained were also accompanied by a visual judgement on the degree of coverage of the cords in the detachment area.

The samples were, indeed, inspected in the separation section, to check for the presence of possible detachments that occurred in the interface between compound and adhesive layer or in the interface between adhesive layer and cord.

The visual judgement was translated into a numerical value by attributing a value from 1 to 3, to respectively indicate: insufficient attachment if the sample had the cords without a trace of compound (value 1), acceptable attachment if the sample had lacerated compound and cords partially covered (value 2) or good attachment if the sample had lacerated compound and cords completely covered with compound.

The density of the fibres for the evaluation of the twist factor is known in the literature, and the number of twists given to the ends and to the cords is a known quantity that qualifies the cords.

The twist factor is a parameter, typically used in the textile industry, which allows to compare the fatigue resistance of cords with different fibre counts and constructions.

The formula used to calculate the twist factor is the following:

$$TF = twist\ per\ inch\ cord\ \times\ \sqrt{\frac{denier\ cord}{density\ cord}}$$

where TF is the twist factor

*Twist per inch cord* is the number of twists per inch (2.54 cm) of cord

*Denier cord* is the fibre count of the cord expressed in Denier where 1 Den = 1 g/9000m.

For the Disk Fatigue test the methodology of international standard ASTM D 6588-02 was substantially adopted but applying different fatiguing conditions of the cord, listed below.

- testing temperature 100°C
- frequency 10Hz
- fatiguing time of the test pieces 24h
- 6% deformation in traction
- 17% deformation in compression

It should indeed be noted that the structure of the cord, in terms of count and twists given to the ends, also affects fatigue resistance and, in the aforementioned standard, this is not specified.

Therefore, testing conditions were applied that are optimised in terms of percentage deformation both in traction and in compression, so as to be able to intensely stress the fibre but without destroying it, so as to then be able to measure the actual percentage degradation of the break force.

The same conditions were applied to all the materials under examination, in order to have a direct and homogeneous comparison.

In the area of operating deformations (greater than 3%) the three Lyocell cords, 1^ = LYO 1840/3 (38x38), 2' = LYO 1840/3 (30x30) and 3^ = LYO 2440/2 (25x25), showed lower elongations than that of the respective Rayon cords of corresponding count/twists tested: 4* = RY 1840/3 (38x38), 5* = RY 1840/3 (30x30) and 6* = RY 1840/3 (25x25) and greater than that of the cords of aramid fibres, 7* = AR 1100/2 (45x45), 8* = AR 1680/2 (31.5x31.5).

The values of tension and specific elongation obtained also show that in the area of operating deformations (between 3% and 4%) the Lyocell cords have as elastic response, tension values of at least 140 N and not greater than 200 N, for deformation values of at least 3%, and of at least 170 N and not greater than 240 N for deformation values of at least 4%.

Indeed, the value of the modulus of the Lyocell cords tested, for deformations beyond 3%, is between the values of Aramid and Rayon.

Lyocell cords thus proved to be more rigid than Rayon ones in the area of operating deformations (3% and more) and displayed a more marked decrease in elongation as the load applied increased, compared to Rayon cords.

From the point of view of the adhesion of the cords to the rubber compound, Lyocell showed substantially identical adhesion to Rayon (inspection mark 3) and a greater adhesion than Aramid (inspection mark 2). Comparative tests were also carried out between tyres with standard carcass construction 190/60R17 slick, intended for being used as rear tyres on motor vehicles used in superbike races of piston displacement of 1000 cc. Series of three rear tyres were then made:

- a first tyre for reference, equipped with carcass comprising cords made from Rayon (RY1840/3 38x38 F97);

- a second tyre for reference, equipped with carcass comprising cords made from aramid fibres (AR1100/2 45x45 F80);
- a tyre according to the present invention, equipped with carcass comprising cords made from Lyocell (LYO 1840/3 38x38 F97).

Driving tests on a motorcycle of 1000 cc equipped with the aforementioned rear tyres were carried out on a racing track with professional drivers in two different dedicated testing sessions, on two tracks with different roughness of the asphalt.

The result of the performance tests in both testing sessions placed the tyre with carcass comprising cords made from lyocell fibre at an analogous level in performance to Aramid, achieving a reduction in times by about 0.5 - 1 second per lap compared to the construction with carcass reinforced through Rayon cords, with lower degradation of performance.

Moreover, after travelling about 75 km the constructions in Aramid or Lyocell allowed to achieve substantially the same performance, whereas the tyre with carcass made from Rayon cords lost about 1 second per lap.

The sensation reported by the driver at the end of the test was that the tyre made with carcass comprising Lyocell cords allowed the trajectory to be held better in corners, in particular in the middle of the corner, and transmitted better grip of the motor vehicle allowing the predefined trajectory line to be held compared to tyres made with Aramid or Rayon cords.

Comparative tests were also carried out between tyres intended to a less extreme use, equipped with a carcass reinforced through Rayon cords and tyres according to the invention equipped with carcass reinforced through Lyocell cords.

The tyres object of the test were tyres 190/55R17, intended to be used in racing motor vehicles of the superstock 1000 cc category, therefore vehicles with cycling and set-ups less extreme than those intended to be used in superbike races.

In this case it has been noted a greater durability of the tyres reinforced with Lyocell cords compared to those equipped with Rayon cords.

It was not possible to include in the comparison tyres with Aramid carcass cords since the product type-approvals necessary in this class of tyre (street legal marking) actually rule out the application thereof.

## Claims

1. Method for controlling a motor vehicle equipped with front and rear tyres, respectively, having a transverse curvature ratio (f/C) of at least 0.20 and a total height/ <u>width</u> (H/C) ratio of at least 0.5, both in normal driving conditions and on a racing track, <u>comprising:</u>

   <u>providing at least one from said tyres with a radial carcass comprising textile cords of lyocell fibre having a response that is substantially comprised between about 140 N and about 200 N for an extension of about 3% and substantially comprised between about 170 N and about 240 N for an extension of about 4%;</u>
   <u>inflating said</u> at least one of said tyres <u>with</u> an inflation pressure of between 50% and 90% of the low load reference value in normal driving,
   <u>wherein</u> said textile cords <u>of lyocell fibre</u> at said inflation pressure, when there are sudden changes in speed and/or direction, give the whole of the carcass a controlled elastic response that allows the motor vehicle to be controlled

2. Tyre (100) for motor vehicles comprising:

   a carcass structure (2) comprising a central crown portion and two axially opposite side portions, each side portion being associated with a respective annular reinforcement structure (9);
   a belt structure (5) applied in a position radially outside of the carcass structure (2);
   a tread band (8) applied in a position radially outside of the belt structure (5);
   said tyre (1) having a transverse curvature ratio (f/C) of at least 0.20 and a total height/ width (H/C) ratio of at least 0.5,
   wherein said carcass structure (2) comprises at least one carcass layer built substantially on cords made from lyocell fibre;
   **characterised in that** said cords of lyocell fibre have a response that is substantially comprised between about 140 N and about 200 N for an extension of about 3% and substantially comprised between about 170 N and about 240 N for an extension of about 4%.

3. Tyre (1) according to claim 2, wherein said cords are formed from one or more twisted thread-like reinforcement elements.

4. Tyre (1) according to claim 3, wherein said thread-like reinforcement elements have a fibre count of between 1000 and 4000 dTex.

5. Tyre (1) according to any one of claims 2 to 4, wherein said cords have a fibre count of between 1000 and 12000 dTex.

6. Tyre (1) according to claim 5, wherein said cords have a fibre count of between 1220/1 dTex and 3680/3 dTex where the terms /1 or /3 represent the number of ends of yarn twisted together in each construction.

7. Tyre according to any one of claims 2 to 6, wherein the density of the textile cords in the carcass fabric is between 60 cords/dm and 130 cords/dm.

8. Tyre according to any one of claims 2 to 7, wherein the twisting respectively given to each end and to the set of ends that form said cords is between 20 and 55 twists per decimetre or equivalently from 200 TPM to 550 TPM (Twists Per Meter).

9. Tyre according to any one of claims 2 to 8, wherein said tyre is intended for equipping the rear wheel of a motor vehicle and has width substantially comprised between 160 and 210 mm.

10. Tyre according to claim 9, wherein the distance (f) between the radially outer point of the tread and the line passing through the laterally opposite extremities of the tread itself of said rear tyre is substantially comprised between 50 and 80 mm.

11. Tyre according to claim 9, wherein the transverse curvature ratio (f/C) of said rear tyre is substantially comprised between 0.20 and 0.50.

12. Tyre according to any one of claims 2 to 8, wherein said tyre is intended for equipping the front wheel of a motor vehicle and has width substantially comprised between 110 and 130 mm.

13. Tyre according to claim 12, wherein the distance (f) between the radially outer point of the tread and the line passing through the laterally opposite extremities of the tread itself of said front tyre is substantially comprised between 45 and 65 mm.

14. Tyre according to claim 12 or 13, wherein the transverse curvature ratio (f/C) of said front tyre is substantially comprised between 0.35 and 0.60.

**Patentansprüche**

1. Verfahren zum Steuern eines Motorfahrzeugs, das jeweils mit Vorder- und Hinterreifen, mit einem Querkrümmungsverhältnis (f/C) von mindestens 0.20 und einem gesamten Höhen-/Breiten-(H/C)-Verhältnis von mindestens 0.5, sowohl unter normalen Fahrbedingungen und auf einer Rennfahrbahn, ausgestattet ist, welches umfasst:

   Versehen von mindestens einem der Reifen mit einer Radialkarkasse mit Textilcorden aus Lyocellfasern, die eine Reaktion zeigen, die im Wesentlichen zwischen ungefähr 140 N und ungefähr 200 N für eine Dehnung von ungefähr 3% enthalten ist und im Wesentlichen zwischen ungefähr 170 N und ungefähr 240 N für eine Dehnung von ungefähr 4% enthalten ist;
   Füllen des mindestens einen der Reifen mit einem Fülldruck von zwischen 50% und 90% des Niedriglastreferenzwerts bei normaler Fahrt,
   wobei die Textilcorde aus Lyocellfasern bei dem Fülldruck, wenn plötzliche Veränderungen in Geschwindigkeit und/oder Richtung auftreten, der Gesamtheit der Karkasse eine kontrollierte elastische Reaktion verleihen, die es erlaubt, dass das Motorfahrzeug gesteuert wird.

2. Reifen (100) für Motorfahrzeuge mit:

   einer Karkassenstruktur (2) mit einem zentralen Scheitelabschnitt und zwei axial gegenüberliegenden Seitenabschnitten, wobei jeder Seitenabschnitt mit einer jeweiligen ringförmigen Verstärkungsstruktur (9) assoziiert ist; einer Gürtelstruktur (5), die an einer Position angebracht ist, die radial außerhalb der Karkassenstruktur (2) liegt; einem Laufflächenband (8), das an einer Position angebracht ist, die radial außerhalb der Gürtelstruktur (5) liegt; wobei der Reifen (1) ein Querkrümmungsverhältnis (f/C) von mindestens 0.20 und ein gesamtes Höhen- /Breiten-(H/C)-Verhältnis von mindestens 0.5 aufweist, wobei die Karkassenstruktur (2) mindestens eine Karkassenschicht aufweist, die im Wesentlichen auf Corden, welche aus Lyocellfasern hergestellt sind, aufgebaut ist;

**dadurch gekennzeichnet, dass** die Corde aus Lyocellfasern eine Reaktion zeigen, die im Wesentlichen zwischen ungefähr 140 N und ungefähr 200 N für eine Dehnung von ungefähr 3% und im Wesentlichen zwischen ungefähr 170 N und ungefähr 240 N für eine Dehnung von ungefähr 4 % liegt.

3. Reifen (1) nach Anspruch 2, bei dem die Corde aus einem oder mehreren gewundenen fadenartigen Verstärkungselementen ausgebildet sind.

4. Reifen (1) nach Anspruch 3, bei dem die fadenartigen Verstärkungselemente eine Faseranzahl von zwischen 1000 und 4000 dTex aufweisen.

5. Reifen (1) nach einem der Ansprüche 2-4, bei dem die Corde eine Faseranzahl von zwischen 1000 und 12000 dTex aufweisen.

6. Reifen (1) nach Anspruch 5, bei dem die Corde eine Faseranzahl von zwischen 1220/1 dTex und 3680/3 dTex aufweisen, wobei die Terme /1 oder /3 die Anzahl an Enden von Faden darstellen, die bei jeder Konstruktion miteinander verdreht werden.

7. Reifen nach einem der Ansprüche 2-6, bei dem die Dichte an Textilcorden in dem Karkassengewebe zwischen 60 Corden/dm und 130 Corden/dm liegen.

8. Reifen nach einem der Ansprüche 2-7, bei dem die Verdrehung, die jeweils auf jedes Ende und auf den Satz an Enden, welche die Corde bilden, angewendet wird, zwischen 20 und 55 Verdrehungen pro Dezimeter oder, äquivalent dazu, zwischen 200 TPM und 550 TPM (Verdrehungen pro Meter; "Twists per Meter") liegt.

9. Reifen nach einem der Ansprüche 2-8, wobei der Reifen dazu vorgesehen ist, das Hinterrad eines Motorfahrzeugs auszustatten und eine Breite aufweist, die im Wesentlichen zwischen 160 und 210 mm liegt.

10. Reifen nach Anspruch 9, bei dem der Abstand (f) zwischen dem radial äußeren Punkt der Lauffläche und der Linie, die durch die seitlich gegenüberliegenden Enden der Lauffläche des Hinterreifens selbst läuft, im Wesentlichen zwischen 50 und 80 mm liegt.

11. Reifen nach Anspruch 9, bei dem das Querkrümmungsverhältnis (f/C) des Hinterreifens im Wesentlichen zwischen 0.20 und 0.50 liegt.

12. Reifen nach einem der Ansprüche 2-8, wobei der Reifen dazu vorgesehen ist, das Vorderrad eines Motorfahrzeugs auszustatten und eine Breite aufweist, die im Wesentlichen zwischen 110 und 130 mm liegt.

13. Reifen nach Anspruch 12, bei dem der Abstand (f) zwischen dem radial äußeren Punkt der Lauffläche und der Linie, die durch die seitlich gegenüberliegenden Enden der Lauffläche des Vorderreifens selbst läuft, im Wesentlichen zwischen 45 und 65 mm liegt.

14. Reifen nach Anspruch 12 oder 13, bei dem das Querkrümmungsverhältnis (f/C) des Vorderreifens im Wesentlichen zwischen 0.35 und 0.60 liegt.

**Revendications**

1. Procédé pour maîtriser un véhicule motorisé équipé de pneus avant et arrière, respectivement, présentant un rapport de courbure transversale (f/C) d'au moins 0,20 et un rapport hauteur totale/largeur (H/C) d'au moins 0,5, à la fois en conditions normales de conduite, et sur une piste de course, le procédé comprenant :

munir au moins l'un desdits pneus d'une carcasse radiale comprenant des câblés textile en fibre de lyocell présentant une réponse sensiblement comprise entre environ 140 N et environ 200 N pour une élongation d'environ 3%, et sensiblement comprise entre environ 170 N et environ 240 N pour une élongation d'environ 4% ; gonfler ledit au moins l'un desdits pneus à une pression de gonflage comprise entre 50% et 90% de la valeur de référence de la charge basse en conduite normale,

dans lequel lesdits câblés textile en fibre de lyocell à ladite pression de gonflage, en cas de changements brusques de vitesse et/ou de direction, confèrent à l'ensemble de la carcasse une réponse élastique contrôlée permettant de maîtriser le véhicule motorisé.

2. Pneu (100) pour des véhicules motorisés comprenant :

une structure de carcasse (2) comprenant une partie de sommet centrale et deux parties latérales axialement opposées, chaque partie latérale étant associée à une structure de renfort annulaire (9) respective;

une structure de ceinture (5) disposée en une position radialement extérieure par rapport à la structure de carcasse (2);

une bande de roulement (8) disposée en une position radialement extérieure par rapport à la structure de ceinture (5);

ledit pneu (1) présentant un rapport de courbure transversale (f/C) d'au moins 0,20 et un rapport hauteur totale/ largeur d'au moins 0,5,

dans lequel ladite structure de carcasse (2) comprend au moins une couche de carcasse fabriquée principalement sur des câblés en fibre de lyocell;

**caractérisé en ce que** lesdits câblés en fibre de lyocell présentent une réponse sensiblement comprise entre environ 140 N et environ 200 N pour une élongation d'environ 3%, et sensiblement comprise entre environ 170 N et environ 240 N pour une élongation d'environ 4%.

3. Pneu (1) selon la revendication 2, dans lequel lesdits câblés sont constitués d'un ou de plusieurs éléments de renfort filiformes torsadés.

4. Pneu (1) selon la revendication 3, dans lequel lesdits éléments de renfort filiformes présentent un titre de fibres compris entre 1000 et 4000 dTex.

5. Pneu (1) selon l'une des revendications 2 à 4, dans lequel lesdits câblés présentent un titre de fibres compris entre 1000 et 12000 dTex.

6. Pneu (1) selon la revendication 5, dans lequel lesdits câblés présentent un titre de fibres compris entre 1220/1 dTex et 3680/3 dTex, où les termes /1 et /3 représentent le nombre de fils torsadés entre eux dans chaque structure.

7. Pneu selon l'une des revendications 2 à 6, dans lequel la densité des câblés textile dans la toile de carcasse est comprise entre 60 câblés/dm et 130 câblés/dm.

8. Pneu selon l'une des revendications 2 à 7, dans lequel le tressage donné respectivement à chaque fil et à l'ensemble de fils formant lesdits câblés est compris entre 20 et 55 torsions par décimètre ou, de manière équivalente, entre 200 TPM et 550 TPM (Torsions Par Mètre).

9. Pneu selon l'une des revendications 2 à 8, dans lequel ledit pneu est prévu pour équiper la roue arrière d'un véhicule motorisé et présente une largeur sensiblement comprise entre 160 et 210 mm.

10. Pneu selon la revendication 9, dans lequel la distance (f) entre le point extrême radialement de la bande de roulement et la ligne passant par les extrémités opposées latéralement de la bande de roulement même dudit pneu arrière est sensiblement comprise entre 50 et 80 mm.

11. Pneu selon la revendication 9, dans lequel le rapport de courbure transversale (f/C) dudit pneu arrière est sensiblement compris entre 0,20 et 0,50.

12. Pneu selon l'une des revendications 2 à 8, dans lequel ledit pneu est prévu pour équiper la roue avant d'un véhicule motorisé et présente une largeur sensiblement comprise entre 110 et 130 mm.

13. Pneu selon la revendication 12, dans lequel la distance (f) entre le point extrême radialement de la bande de roulement et la ligne passant par les extrémités opposées latéralement de la bande de roulement même dudit pneu avant est sensiblement comprise entre 45 et 65 mm.

14. Pneu selon la revendication 12 ou 13, dans lequel le rapport de courbure transversale (f/C) dudit pneu avant est sensiblement compris entre 0,35 et 0,60.

FIG. 1

EP 2 459 392 B1

Fig. 2

# FIG. 3

Table

| Sample | 1[A] | 2[A] | 3[A] | 4[*] | 5[*] | 6[*] | 7[*] | 8[*] |
|---|---|---|---|---|---|---|---|---|
| Cord type | LYO 1840/3 (38x38) | LYO 1840/3 (30x30) | LYO2440/2 (25x25) | RY 1840/3 (38x38) | RY 1840/3 (30x30) | RY 1840/3 (25x25) | AR 1100/2 (45x45) | AR 1680/2 (31,5x31,5) |
| Average break load (N) | 234 | 288 | 248 | 241 | 277 | 280 | 375 | 496 |
| Elongation at break (%) | 6,5 | 6,8 | 4,9 | 12,2 | 12,2 | 10,8 | 4,6 | 4,0 |
| Tenacity (cN/Tex) | 39 | 49 | 51 | 40 | 47 | 49 | 154 | 135 |
| Elongation at 34N (%) | 0,9 | 0,6 | 0,5 | 1,1 | 0,8 | 0,7 | 0,6 | 0,3 |
| Elongation at 45N (%) | 1,1 | 0,8 | 0,7 | 1,4 | 1,0 | 0,9 | 0,7 | 0,4 |
| Elongation at 68N (%) | 1,5 | 1,1 | 0,9 | 2,1 | 1,5 | 1,3 | 1,1 | 0,6 |
| Elongation at 90N (%) | 1,9 | 1,4 | 1,2 | 2,8 | 2,1 | 1,7 | 1,4 | 0,8 |
| Elongation at 100N (%) | 2,1 | 1,5 | 1,3 | 3,2 | 2,3 | 1,9 | 1,6 | 0,9 |
| Elongation at 210N (%) | 5,4 | 3,8 | 3,3 | 10,3 | 7,1 | 8,3 | 3,0 | 1,9 |
| Load at 2% elongation (N) | 95 | 133 | 153 | 65 | 87 | 104 | 130 | 218 |
| Load at 3% elongation (N) | 140 | 180 | 200 | 96 | 120 | 140 | 210 | 350 |
| Load at 4% elongation (N) | 173 | 217 | 230 | 117 | 143 | 159 | 306 | 496,0 |
| Twists (Tpm) | 380 | 300 | 250 | 380 | 300 | 250 | 450 | 315 |
| Rubber-coated fabric adhesion | | | | | | | | |
| Room temperature (cN/mm²) | 800 | 800 | 800 | 800 | 800 | 800 | 600 | 700 |
| After 10 minutes at 90°C (cN/mm²) | 600 | 600 | 600 | 600 | 600 | 600 | 400 | 500 |
| Compound/cords adhesion (value 1 to 3) | 3 | 3 | 3 | 3 | 3 | 3 | 2 | 2 |
| Density (fibre g/cm²) | 1,52 | 1,52 | 1,52 | 1,51 | 1,51 | 1,51 | 1,44 | 1,4 |
| Twist factor | 855 | 778 | 648 | 858 | 677 | 565 | 657 | 588 |
| Strain retention-Fatigue | 66% | - | - | 81% | - | - | 45% | 45% |

[A]Invention    [*]Comparison

EP 2 459 392 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 200957008 A
- EP 0860302 A
- US 6852413 B2
- WO 0038906 A

**Non-patent literature cited in the description**

- 161st Spring Technical Meeting. ACS, 29 April 2002
- **LYOCELL ; ÈVA BORBÈLY.** The New Generation of Regenerated Cellulose. *Acta Polytechnica Hungarica,* 2008, vol. 5 (3
- **B. JELSMA ; K. UIHLEIN.** *Tire Technology Expo 2008 - Cologne,* 21 March 2008